# EUROPÄISCHE PATENTSCHRIFT

(11) **EP 2 117 100 B1**
(45) Veröffentlichungstag und Bekanntmachung des Hinweises auf die Patenterteilung: **18.02.2015**
(21) Anmeldenummer: 09159544.7
(22) Anmeldetag: 06.05.2009
(51) Int. Cl.: H02K 7/06, H02K 49/10

(54) **Magnetischer Bewegungswandler**
Magnetic movement converter
Convertisseur de mouvements magnétiques

(30) Priorität: 07.05.2008 DE 102008022584
(43) Veröffentlichungstag der Anmeldung: 11.11.2009
(73) Patentinhaber: Mihalji, Lajos, 51789 Lindlar (DE)
(72) Erfinder: Mihalji, Lajos, 51789 Lindlar (DE)
(74) Vertreter: Lippert, Stachow & Partner

(56) Entgegenhaltungen:
- FR-A1- 2 233 738
- US-A- 3 967 146
- US-A- 4 196 365
- US-A1- 2002 167 239

## Beschreibung

Die Erfindung betrifft magnetische Bewegungswandler zur Umwandlung einer Linearbewegung in eine Rotationsbewegung bzw. einer Rotationsbewegung in eine Linearbewegung gemäß den Oberbegriffen der Ansprüche 1 und 2.

Derartige magnetische Bewegungswandler ermöglichen im Vergleich zu einem mechanischen Bewegungswandler eine besonders verlustfreie Bewegungsumwandlung. Ein gattungsgemäßer Bewegungswandler wird in der US 4 196 365 A offenbart, der als ersten Magneten eine Kreisscheibe mit drei flachen um 120° versetzt angeordneten viereckigen Magneten und als zweiten Magneten einen Streifen mit zwei größeren Seitenflächen aufweist, wobei an einer größeren Seitenfläche endseitig jeweils ein flacher viereckiger Magnet angeordnet ist, der dem ersten Magneten zugewandt ist, und der Streifen mittig um eine Schwenkachse senkrecht zu seiner Längsrichtung und parallel zu den größeren Seitenflächen verschwenkbar ist. Ein Problem ist, dass die Drehrichtung bei Umsetzung der Hubbewegung in die Drehbewegung nicht vorhersehbar ist.

In der US 3 967 146 A wird ein magnetischer Bewegungswandler beschrieben, in dessen Magnetspalt ein Magnetkernelement in Form einer kreisrunden Drehscheibe angeordnet ist, von der nur eine Hälfte magnetisierbar ist.

Gemäß der US 2002/0167239 A1 wird eine Pendelbewegung eines Stabmagnetelementes relativ zu auf einer um eine Drehachse drehbar gelagerten Scheibe angeordneten Magneten in Drehbewegung der Scheibe umgesetzt.

Die FR 2 233 738 A1 beschreibt einen magnetischen Bewegungswandler, mittels dessen, ähnlich einer Unruhe einer Uhr, eine Drehpendelbewegung in eine schrittweise Drehbewegung umgewandelt wird.

Weitere magnetische Bewegungswandler werden zum Beispiel in den Druckschriften US 6 700 248 B2, US 6 433 452 B1 und US 2007/0120432 A1 beschrieben. Die dort beschriebenen Bewegungswandler sind verhältnismäßig komplex und aufwändig.

Der Erfindung liegt die Aufgabe zugrunde, einen Bewegungswandler der eingangs genannten Art bereitzustellen, der eine Hubbewegung in vorbestimmter Drehrichtung umsetzt.

Die Aufgabe wird erfindungsgemäß durch einen Bewegungswandler mit den Merkmalen gemäß Anspruch 1 gelöst.

Damit ist die Drehscheibe so ausgebildet, dass sie mit einsetzender Schwenkbewegung des ersten Magneten beginnt, in eine vorbestimmte Drehrichtung zu rotieren. Es ist also eine Art Starthilfe vorgesehen. Hierzu weist die kreissegmentartige oder kreissektorartige Drehscheibe an einer bezüglich ihrer vorgesehenen Drehrichtung um die Drehachse hinteren Seite einen sich in die Drehrichtung erstreckenden Vorsprung auf. Durch diesen Vorsprung wird der Magnetfluss an dieser Stelle zusätzlich verstärkt, so dass ein zusätzlicher Kraftimpuls in Drehrichtung erzeugt werden kann, der den Vorsprung bei der Schwenkbewegung in Richtung des sich vergrößernden Spaltes zieht, so dass die Drehscheibe in umfängliche Erstreckungsrichtung des Vorsprunges beschleunigt werden kann. Es kann vorgesehen sein, dass zumindest ein Teil des Vorsprunges aus einem Werkstoff höherer Permeabilität als die des Werkstoffes der restlichen Drehscheibe gefertigt ist. Damit kann dieser zusätzliche Kraftimpuls verstärkt werden.

In ähnlicher Weise wirkend ist zusätzlich oder alternativ zum Vorsprung an einer bezüglich ihrer vorgesehenen Drehrichtung um die Drehachse vorderen Seite eine sich in Drehrichtung erstreckende Ausnehmung, wie Durchgangsöffnung, Einschnitt oder Wegschnitt, vorgesehen. Hierdurch weist die vordere Seite mit der Ausnehmung einen radialen Bereich stark verminderter Permeabilität auf. Dadurch kann ebenfalls ein Kraftimpuls in Drehrichtung auf die Drehscheibe aufgeübt werden, der die Ausnehmung bei der Schwenkbewegung in Richtung des sich verkleinernden Spaltes zieht. Sind Vorsprung an der hinteren Seite und Vorsprung an der vorderen Seite vorgesehen, so können die Kraftimpulse eines Kräftepaares die Drehscheibe in die Richtung als Drehrichtung beschleunigen, in die der Vorsprung weist.

Vorzugsweise sind Vorsprung und/oder Ausnehmung an einem radial äußeren Bereich der Drehscheibe angeordnet. Hierdurch kann das durch den Kraftimpuls erzeugte und auf die Drehscheibe in Drehrichtung wirkende Drehmoment maximiert werden.

Vorzugsweise ist die Drehscheibe etwa halbkreisförmig vorzugsweise mit dem Vorsprung an der bezüglich der vorgesehenen Drehrichtung hinteren Seite und/oder der Ausnehmung an der bezüglich der vorgesehenen Drehrichtung vorderen Seite ausgebildet, wobei die Drehscheibe zu ihrer drehbaren Lagerung im Bereich der Drehachse zu einem Vollkreis mit einer mittigen Öffnung ausgebildet sein kann, durch die die Drehachse geführt und an der die Drehscheibe drehfest festgelegt sein kann.

Es wird ein einfacher Aufbau des magnetischen Bewegungswandlers vorgeschlagen. Die Magnetseitenflächen sind mit ihrer Begrenzung eines ebenen, ungekrümmten Magnetspaltes ebenfalls zumindest im Bereich des Magnetspaltes eben und ungekrümmt ausgebildet, so dass hierdurch ein starkes und weitgehend homogenes Magnetfeld im Magnetspalt erzeugt werden kann. Die Magnete weisen bezüglich ihrer Magnetseitenflächen eine magnetische Polarisierung auf, die zumindest mit einer größeren Komponente senkrecht, vorzugsweise senkrecht zu den Magnetseitenflächen erfolg ist. Durch die gleiche magnetische Polarität entsteht in dem Magnetspalt ein Magnetfeld mit einander abstoßenden Magnetkräften. Werden die Magnete nicht von außen her zwangsbewegt, so stellt nehmen die Magnete eine relative Gleichgewichtsposition zueinander ein, die, bei einem gleicher Ausbildung der Magnete, der Nullposition entspricht. Es versteht sich, dass die Drehachse in der Nullposition durch den Kreismittelpunkt des zweiten Magneten gehen kann.

Als Nullposition kann allgemein die Position bezeichnet werden, in der die Magnetfelddichte, bei einer gleichmäßigen Magnetisierung der Magnete über die großen Seitenflächen, in dem Magnetspalt ab einem bestimmten Abstand vom Rand der Magnetseitenflächen bis auf den exzentrischen Bereich in Seitenflächenebene bezüglich einer Magnetspaltmitte symmetrisch ist. Vorzugsweise sind die Magnete in der Nullposition parallel zueinander angeordnet und können mit ihren Magnetseitenflächen einen ebenen, ungekrümmten Magnetspalt begrenzen.

Wird der zweite Magnet verschwenkt, so wird der Magnetspalt auf einer Schwenkseite gegen die abstoßenden Magnetkräfte verklei-und auf der bezüglich der Schwenkachse gegenüberliegenden Schwenkseite mit den einander abstoßenden Magnetkräften vergrößert. Ist das Magnetfeld über die gesamte Magnetspaltgröße homogen und symmetrisch zur Schwenkachse, so kann über die Schwenkbewegung keine resultierende umfängliche Magnetkraft entstehen, mittels dessen der drehbar gelagerte erste Magnet angetrieben werden kann.

Das Magnetfeld ist jedoch aufgrund der in dem exzentrischen Bereich vorgesehenen vorzugsweise schwächeren Magnetisierung und/oder seiner Ausnehmung in dem exzentrischen Bereich in seiner Symmetrie bezüglich der Drehachse gestört und zumindest über den exzentrischen Bereich inhomogen, so dass hier die sich abstoßenden Magnetkräfte, abhängig davon, ob die Magnetisierung in dem exzentrischen Bereich größer oder geringer, verstärkt oder abgeschwächt sind. Dadurch entstehen mit der Schwenkbewegung sich ändernde resultierende Magnetkräfte, die aufgrund der Anordnung und der relativen Lage der Magnete mit einer Kraftkomponente umfänglich so gerichtet sind, dass sie den drehbar gelagerten ersten Magnet in Drehrichtung beschleunigen. Ist lediglich ein exzentrischer Bereich über einen bestimmten Umfangsbereich vorgesehen, so ist die resultierende Magnetkraft bei einer schwächeren Magnetisierung in dem exzentrischen Bereich dann maximal, wenn sich der exzentrische Bereich etwa oder genau dort befindet, wo aufgrund der Schwenkbewegung eine maximale Magnetspaltgröße erreicht ist. Entsprechend kann bei dieser Anordnung und ohne weitere Verschwenkung des zweiten Magneten ein "Todpunkt" bei einer um einen Drehwinkel von 180° versetzen Positionierung des exzentrischen Bereiches auftreten, wobei dieser Todpunkt einer Ruheposition entspricht. Hierbei sind diese Zuordnungen, wie Todpunkt und Position mit maximaler resultierender umfänglich wirkender Magnetkraft, von den Geometrien der Magnete und des Magnetspaltes, den Magnetisierungen und insbesondere von den Geometrien des exzentrischen Bereiches abhängig. Einen ähnlichen Effekt hat die exzentrische Ausnehmung in der Magnetseitenfläche des ersten Magneten, da hier das Magnetfeld wegen fehlender Magnetisierung entsprechend empfindlich gestört bzw. geschwächt werden kann.

Vorzugsweise ist die Magnetisierungsstärke des exzentrischen Bereiches der Magnetseitenfläche des ersten Magneten erheblich schwächer als die außerhalb des exzentrischen Bereiches.

Eine oben beschriebene Magnetfeldstörung oder -Änderung kann, wie vorgeschlagen, mittels einer zur Drehachse nichtsymmetrischen oder asymmetrischen Form vorzugsweise des ersten Magneten erfolgen. Der zweite Magnet ist als Kreisscheibe ausgebildet, wobei die Schwenkachse vorzugsweise den Kreismittelpunkt schneidet. Somit kann ein üblicher industrieller Dauermagnet eingesetzt werden. Der erste Magnet ist als kreisförmige Drehscheibe oder als kreisausschnittsartige, kreissegmentartige und/oder kreissektorartige Drehscheibe ausgebildet. Hierbei kann der erste Magnet eine kreiszylindrische Form aufweisen, während die kreisausschnittsartige, kreissegmentartige und/oder kreissektorartige Drehscheibe als Teilzylinder mit einer entsprechenden kreisausschnittsartigen, kreissegmentartigen und/oder kreissektorartigen Grundfläche ausgebildet sein kann. Die Ausnehmung kann der Teil des als Drehscheibe ausgebildeten ersten Magnetes sein, der die kreisausschnittsartige, kreissegmentartige und/oder kreissektorartige Form zu einer vollständigen Kreisform ergänzt. Dadurch wird eine exzentrische Ausnehmung vorgeschlagen, die innerhalb der Kreissymmetrien des ersten Magnetes liegt. Vorzugsweise liegen die Kreismittelpunkte beider Magnete auf der Drehachse.

Zur Lösung der Aufgabe wird ferner ein Bewegungswandler mit den Merkmalen gemäß Anspruch 2 vorgeschlagen.

Somit wird, wie bei der bereits beschriebenen Ausführungsform des Bewegungswandlers, eine Art Starthilfe vorgeschlagen, mittels derer die Drehscheibe in eine vorbestimmte Drehrichtung hinein zu drehen beginnen kann. Hierbei ist die Nullposition wie zuvor definiert. Ähnlich wie bei zuvor beschriebenen magnetischen Bewegungswandler mit einer vorzugsweise zumindest schwächeren Magnetisierung und/oder Ausnehmung in dem exzentrischen Bereich, wird hier mittels einer vorzugsweise schwächeren Permeabilität des Magnetkernelementes in dem exzentrischen Bereich das Magnetfeld mit den einander abstoßenden Kräften gestört, so dass eine umfängliche resultierende Magnetkraft entsteht. Vorteilhaft bündelt das Magnetkreiselement das Magnetfeld. Somit kann durch den exzentrischen Bereich des Magnetkernelementes mit geringerer Permeabilität und damit Bündelung des Magnetfeldes der oben beschriebene Effekt verstärkt werden, mittels dessen mit Schwenkbewegung des zweiten Magneten eine resultierende umfängliche Magnetkraft erzeugt werden kann. Da der erste Magnet statisch angeordnet ist, kann hierdurch allein eine Drehung des Magnetkernelementes bewirkt werden. wie in den vorherigen Ausführungsformen des magnetischen Bewegungswandlers, so sind, abhängig von den Geometrien der einzelnen Bauteile wie deren Magnetisierungen, über die Drehbewegung des Magnetkernelementes an gleichen Positionen des exzentrischen Bereiches ein Todpunkt und Position mit maximaler resultierender umfänglich wirkender Magnetkraft ermittelbar.

Es versteht sich, dass die Drehachse in der Nullposition durch den Kreismittelpunkte der Magnete gehen kann und dass ferner die Magnete in der Nullposition fluchtend zueinander angeordnet sein können. Mittels der beiden Magnete kann im Magnetspalt ein weitgehend homogenes und starkes Magnetfeld erzeugt werden, dass durch das Magnetkernelement gestört wird.

Vorzugsweise ist die Permeabilität des exzentrischen Bereiches des Magnetkernelementes erheblich schwächer als die außerhalb des exzentrischen Bereiches.

Ähnlich wie zuvor der erste Magnet, so ist das Magnetkernelement als kreisausschnittsartige, kreissegmentartige und/oder kreissektorartige Drehscheibe ausgebildet, während hier die Magnetseitenfläche beider Magneten vorteilhaft als Kreisscheibe vorzugsweise mit gleichen Radien ausgebildet ist. Ferner können sie gleiche Höhen aufweisen. Somit können die beiden Magnete vollkommen baugleich sein. Hierbei kann jeweils ein Zylinder als Grundform für die Bauteile vorliegen. Sie können an den Stirnseiten jeweils eine Magnetseitenfläche aufweisen, wobei diese sich in ihrer Polarität unterscheiden. Im Falle der kreisausschnittsartigen, kreissegmentartigen und/oder kreissektorartigen Drehscheibe kann diese als Teilzylinder mit einer entsprechenden kreisausschnittsartigen, kreissegmentartigen und/oder kreissektorartigen Grundfläche ausgebildet sein. Die Ausnehmung kann der Teil des als Drehscheibe ausgebildeten Magnetkernelementes sein, der die kreisausschnittsartige, kreissegmentartige und/oder kreissektorartige Form zu einer vollständigen Kreisform ergänzt. Dadurch wird eine exzentrische Ausnehmung vorgeschlagen, die innerhalb der Kreissymmetrien des Magnetkernelementes liegt. Vorzugsweise sind liegen die Kreismittelpunkte beider Magnete und des Magnetkernelementes auf der Drehachse.

Im Folgenden wird jeweils mit der Drehscheibe Bezug auf den ersten Magneten, sofern dieser drehbar gelagert ist, und/oder auf das drehbar gelagerte Magnetkernelement genommen.

Vorzugsweise beträgt der Mittelpunktswinkel der kreisausschnittsartigen, kreissegmentartigen und/oder kreissektorartigen Drehscheibe mindestens 150°, vorzugsweise mindestens 180° und idealerweise mindestens 210°. Bei einem Mittelpunktswinkel von größer 210° kann die Drehscheibe über die Drehbewegung stets mit zumindest einem Mittelpunktswinkelabschnitt bezüglich des zweiten Magneten gegenüber beiden Schwenkbereichen angeordnet sein. Hierdurch kann unter anderen der Todpunkt leichter überwunden werden.

Vorzugsweise sind beide Magnete bzw. beide Magnete und das Magnetkernelement so angeordnet, dass sich Schwenkachse und Drehachse schneiden. Da beide Achsen zusätzlich senkrecht zueinander und die Drehachse senkrecht zur Magnetseitenfläche des ersten Magneten bzw. zum Magnetkernelement angeordnet sind, fluchten die Magnete miteinander bzw. die Magnete mit dem Magnetkernelement.

Die Magnete können gleiche Radien aufweisen. Ferner können beide Magnete eine gleiche Magnetisierungsstärke pro Flächeneinheit der Magnetisierungsfläche aufweisen. Hierdurch kann die Magnetfeldsymmetrie optimiert werden. Vorzugsweise ist der maximale Radius des Magnetkernelementes etwas geringer als der beider Magnete. Damit kann sichergestellt werden, dass sich das Magnetkernelement vollständig in dem Magnetspalt befindet. Vorzugsweise sind die Magnete als Dauermagnete, insbesondere als Ferritmagnete, ausgebildet. Die Dauermagnete sind vorzugsweise als besonders leistungsfähige Magnete ausgebildet, die bei kleinem Volumen starke Magnetfelder erzeugen können. Dadurch kann die Baugröße des Bewegungswandlers verringert werden. Hierbei können NdFeB-Magnete, wie sog. Neodyn-Magnete mit Nd₂Fe₁₄B als Magnetwerkstoff, oder SmCo-Magnete eingesetzt werden. Die Magnete aus Magnetpartikeln sein, die in einer Kunststoffmatrix eingebettet und gebunden sind, so dass eine gewünschte Magnetform leicht herstellbar ist. Vorzugsweise sind die Magnete handelsübliche Magnete.

Bekanntermaßen ist zur Steigerung der Magnetfeldenergiedichte im Magnetspalt bei gleicher Magnetisierung der Magnetseitenfläche eine möglichst geringe Magnetspaltgröße vorteilhaft. Daher ist vorzugsweise vorgesehen, dass eine Beabstandung im Magnetspalt in der Nullposition zwischen dem ersten und dem zweiten Magnet bzw., bei den Ausführungsformen der Magnetanordnung mit Magnetkernelement im Magnetspalt, zwischen dem zweiten Magnet und dem Magnetkernelement wenig größer als ein vorgesehener maximaler Schwenkhub des zweiten Magneten aus seiner Nullposition in eine vorgesehene maximale Schwenkposition ist. Diese um wenig größere Beabstandung kann gerade so groß ausgelegt sein, dass ein ausreichender Schlupf zwischen der jeweiligen Drehscheibe und dem zweiten Magneten gewährleistet ist.

Zur Leistungssteigung und/oder zur Verbesserung des Wirkungsgrades des Bewegungswandlers können zwei zweite Magnete und ein erster Magnet vorgesehen sein, wobei der erste Magnet zwischen den zweiten Magneten positioniert ist und jeweils mit einem zweiten Magnet einen Magnetspalt begrenzt. Hierzu kann der erste Magnet zwei Magnetseitenflächen aufweisen, wobei eine Magnetseitenfläche vorzugsweise eine magnetische Polarität aufweist, die der der anderen Magnetseitenfläche entgegengesetzt ist. Damit können die einen ersten Magnetspalt begrenzenden Magnetseitenflächen eine negative magnetische Polarität und die einen zweiten Magnetspalt begrenzenden Magnetseitenflächen eine positive magnetische Polarität aufweisen. Bei dieser Anordnung kann mit Verschwenken des zweiten Magneten zu einer ersten Schwenkseite hin der erste Magnetspalt an dieser Seite verringert werden, während er zu der bezüglich der Schwenkachse gegenüberliegenden Schwenkseite entsprechend vergrößert wird. Gleichzeitig kann der zweite Magnetspalt zur ersten Schwenkseite hin entsprechend vergrößert und zur zweiten Schwenkseite hin verkleinert werden. Damit sind Todpunkte, also Punkte minimaler Beschleunigung bis ohne Beschleunigung der Drehscheibe, und Punkte maximaler Beschleunigung der Drehscheibe bezüglich des ersten Magnetspaltes um die des zweiten Magnetspaltes um einen Drehwinkel oder Mittelpunktswinkel von 180° von einander versetzt. Befindet sich die eine Drehscheibe im ersten Spalt im Todpunkt, so kann die andere Drehscheibe im zweiten Spalt maximal beschleunigt werden. Da die Drehscheiben, d.h. die ersten Magneten, vorzugsweise auf einer gemeinsamen Drehachse und damit quasi hintereinander angeordnet sind, kann ein leichteres Anfahren erfolgen und können die Todpunkte auch bei geringen Umdrehungsgeschwindigkeiten leicht überwunden werden. Es können noch weitere erste und zweite Magnete "hintereinander" und jeweils Magnetspalte begrenzend auf der Drehachse sein, wobei die exzentrischen Bereiche der ersten Magnete vorzugsweise symmetrisch zur Drehachse, d.h. in gleichen Drehwinkelabständen, zueinander angeordnet sind. Bei vier Drehscheiben kann somit der Drehwinkel 90°, bei sechs Drehscheiben 60°, bei neun Drehscheiben 40° u.s.w. betragen.

Vorzugsweise ist in jedem Magnetspalt ein um die Drehachse drehbar gelagertes Magnetkernelement angeordnet, wobei die Magnetkernelemente bezüglich ihrer exzentrischen Bereiche vorzugsweise um einen Drehwinkel größer Null versetzt voneinander angeordnet sind. Dieser Drehwinkel beträgt bei zwei Magnetkernelementen vorzugsweise 180°. Es können mehrere durch erste und zweite Magnete gegrenzte Magnetspalte mit jeweils einem Magnetkernelement vorgesehen sein, die auf einer gemeinsamen Drehachse angeordnet sind. Hierbei können die Magnetkernelemente um einen Drehwinkel von 120° voneinander beabstandet sein. Entsprechend kann der Drehwinkel bei vier Magnetkernelementen 90° betragen. In allen Fällen wird ein Gleichlauf der Drehachse gefördert.

Ferner wird eine den Aufbau vereinfachende, symmetrische Anordnung und Ausbildung der Bauteile vorgeschlagen, gemäß der zumindest die Radien der großen Magnetseitenflächen der Magnete und die Größen des Magnetspaltes oder der Magnetspalten gleich groß sind.

Der erste Magnet kann als Doppelmagnet ausgebildet sein, indem zwei Magnete, vorzugsweise gleicher Abmessungen wie die des zweiten Magneten, mit gegenpoligen Magnetseitenflächen aufeinander gesetzt werden, wodurch der erste Magnet entsprechend magnetisch verstärkt werden kann.

In Weiterführung der Anordnung mehrerer Drehkörper auf einer Drehachse, können mehrere erste und zweite Magnete bezüglich der Drehachse in Reihe so verknüpft sein, dass das mittels der ersten Magneten und/oder der Magnetkernelementelemente erzeugte Drehmoment auf eine Drehachse übertragen werden kann, wodurch eine entsprechende Verstärkung eines Drehmomentes auf diese eine Drehachse erfolgen kann. Erfolgt beispielsweise ein Drehimpuls der einzelnen Bewegungswandler auf die Drehachse phasenversetzt zueinander, so können eventuelle Todpunkte vermieden und somit eine größere Laufruhe erzielt werden. Es können zusätzlich oder allein mehrere Anordnungen von mindestens einem ersten und einem zweiten Magneten so parallel verknüpft sein, dass diese auf eine ihnen jeweils zugeordnete Drehachse wirken. Hierdurch können gleichzeitig Drehmomente auf mehreren Drehachsen übertragen werden. Hierbei können auf jede Drehachse wiederum mehrere Drehkörper wirken. Somit kann zur Anpassung an bestimmte Betriebsbedingungen eine Konstellation von zueinander parallel und/oder in Reihe angeordneten Bewegungswandlern vorgesehen sein.

In Bewegungsumkehr kann eine Drehbewegung der Drehachse auf einen Drehkörper übertragen werden, der, wie oben beschrieben, als Magnet oder als Magnetkernelement ausgebildet ist. Infolge des oben beschriebenen exzentrischen Bereich mit einer Ausnehmung und/oder mit einer Magnetisierung oder einer Permeabilität, die vorzugsweise schwächer als die außerhalb des exzentrischen Bereiches ist, kann der zweite Magnet zu einer Schwenkbewegung angeregt werden, die zum Beispiel über ein geeignetes Gestänge in eine Hubbewegung umgeformt werden kann.

In einer abgewandelten Ausführungsform der Magnetvorrichtung kann dieselbe lediglich einen verschwenkbaren Magneten und ein als Drehscheibe ausgebildetes Magnetkernelement aufweisen, wobei die Drehscheibe wie oben detaillierter ausgeführt ausgebildet sein kann und Drehachse und Schwenkachse sich senkrecht schneidend angeordnet sein können. Obwohl hier kein durch Magnete begrenzter Magnetspalt ausgebildet wird, kann das Magnetkernelement durch das sich über ein Hin- und Her-Verschwenken des Magneten relativ zum Magnetkernelement ändernde Magnetfeld in eine Drehbewegung um seine Drehachse versetzt werden. Versuche haben jedoch ein gegenüber den zuvor beschriebenen Ausbildungen des Bewegungswandlers mit dem Magnetspalt ergeben, dass hierdurch lediglich ein geringeres Drehmoment erzeugbar ist.

Die Schwenkbewegung oder Drehbewegung kann manuell erzeugt werden. Vorzugsweise ist ein Motor getriebener Antrieb zur Erzeugung der Schwenkbewegung oder der Drehbewegung vorgesehen. Zur Erzeugung einer Schwenkbewegung kann der Antrieb abtriebseitig in einem von der Schwenkachse beabstandeten ersten Abschnitt an dem zweiten Magneten in Richtung des zu erzeugenden Hubes kraftwirksam angreifen. Um einen möglichst langen Hebelarm bezüglich der Schwenkachse zu erzielen, ist der erste Bereich vorzugsweise maximal von der Schwenkachse beabstandet. Alternativ kann zur Umsetzung einer Drehbewegung in eine Schwenkbewegung durch den Antrieb eine Drehbewegung auf den zweiten Magneten oder das Magnetkernelement übertragen werden, wobei der erste Magnete zur Ausführung und Begrenzung der Hubbewegung vorzugsweise zwangsgeführt ist.

Vorzugsweise weist der Antrieb eine Federvorrichtung auf, die in Richtung des Hubes in einem von der Schwenkachse beabstandeten zweiten Abschnitt auf den ersten Magneten wirkt. Hierbei kann der zweite Abschnitt mit dem ersten Abschnitt zusammenfallen. Eine in den ersten Abschnitt eingeleitete Antriebskraft kann somit unmittelbar ohne zusätzliches Drehmoment auf die Federvorrichtung einwirken. Vorteilhaft ist zum Beispiel eine Schraubenfeder, die in Richtung des Hubes auf den zweiten Magneten einwirkt. Es können auch zwei zweite Abschnitte vorgesehen sein, die vorzugsweise spiegelsymmetrisch zur Schwenkachse als Spiegelsymmetrieachse angeordnet sind.

Die Federvorrichtung kann mechanische und/oder magnetische Federn aufweisen. Hierzu kommen letztlich alle bekannten Federtypen, wie Schraubenfeder, Torsionsfeder oder Drehstabfeder, Biegefeder und Luftfeder/Gasdruckfeder sowie Elastomerfeder, in Betracht. Vorzugsweise sind die Federn für eine schwingende und möglichst verlustarme Belastung ausgelegt. Die Federvorrichtung kann mindestens ein längliches Bauelement aufweist, das senkrecht zur Schwenkachse und zur Drehachse längserstreckt sowie mit einem ersten Endbereich an dem zweiten Abschnitt und mit einem vom ersten Endbereich beabstandeten zweiten Endbereich federwirksam widergelagert ist. Es können zwei Bauteile vorgesehen sein, die vorzugsweise spiegelsymmetrisch zur Schwenkachse als Spiegelsymmetrieachse angeordnet sind.

Vorzugsweise erstreckt sich das Bauelement in Nullposition des ersten Magneten in der Ebene der Magnetseitenfläche des ersten Magneten. In einer als vorteilhaft angesehenen Ausführungsform des Bewegungswandlers ist das Bauelement als Blattfeder ausgebildet. Die Blattfeder kann in dem ersten Endabschnitt starr mit dem zweiten Magneten verbunden sein.

Die Widerlagerung kann rein mechanisch erfolgen. Die Blattfeder kann zur Widerlagerung in dem zweiten Endabschnitt starr mit einer Basis verbunden sein. Die Basis ist bei der Ausführungsform des Bewegungswandlers mit dem Magnetkernelement im Magnetspalt bewegungsfest zum ersten Magneten. In einer anderen Lagerform kann der zweite Bereich in einen Walzspalt zwischen zwei walzenförmigen Rollen geführt und gehalten sein, wobei der zweite Bereich vorzugsweise mit Spiel in dem Walzspalt so gelagert ist, dass eine verlustarme Relativbewegung zwischen Rollen und Blattfeder möglich ist. Der Walzspalt, d.h. die Beabstandung der Rollen, kann um mehr als 5%, vorzugsweise mehr als 15% und idealerweise mehr als 30% größer als die Dimension der Blattfeder über den Walzspalt sein.

Vorzugsweise ist der zweite Endbereich berührungslos widergelagert. Hierdurch können eventuelle Lagerverluste minimiert werden. Die Aufnahme von Lagerungskräften bei der Widerlagerung kann auf magnetischem Wege erfolgen. Die Lagerung im zweiten Endbereich des Bauteiles kann als magnetische Federung ausgebildet sein. Vorzugsweise ist in dem zweiten Endbereich ein vorzugsweise plattenförmiges erstes Magnetelement mit vorzugsweise zwei parallel angeordneten großen Seitenflächen vorgesehen, die als Magnetseitenflächen ausgebildet sind und die in Nullposition des ersten Magneten vorzugsweise senkrecht zur Drehachse angeordnet sind. Zur Magnetlagerung kann, beabstandet zu den Magnetseitenflächen des ersten Magnetelementes, jeweils ein zweites Magnetelement vorgesehen sei, das mit einer gleichen magnetischen Polarität wie die der ihm zugeordnete Magnetseitenfläche auf dieselbe einwirkt.

Vorzugsweise kann das Bauelement nicht als Blattfeder oder als sehr starre Blattfeder ausgebildet sein sowie endseitig, wie oben beschrieben, auf magnetischen Wege widergelagert sein, wobei die magnetische Widerlagerung die Federwirkung ausübt.

Vorzugsweise ist die Federkraft der Federvorrichtung einstellbar. Dieses kann in bekannter Weise durch Verschiebung der Widerlagerung in Längsrichtung des länglichen Bauteiles erfolgen, wodurch der Abstand der Widerlagerung im zweiten Endbereich zum ersten Endbereich einstellbar ist und somit entsprechend die wirksame Federlänge verändert werden kann. Es kann zwischen den beiden Endbereichen oder in Richtung vom ersten Endbereich zum zweiten Endbereich hin über den zweiten Endbereich hinaus ein weiterer Lagerungspunkt vorgesehen sein, der die wirksame Federlänge in zwei Hebel teilt. Mit Verschiebung dieses Lagerungspunktes sind die Längenverhältnisse der Hebel und damit Federkraft und damit Schwingungsverhältnisse der Feder einstellbar.

Vorzugsweise ist die Widerlagerung so einstellbar, dass die Blattfeder über den Hub zu einer als stehende Welle ausgebildeten Schwingung mit einer Schwingungsebene angeregt wird, die vorzugsweise Drehachse und Schwenkachse aufweist.

Im Falle einer magnetischen Widerlagerung kann die Federkraft zum Beispiel dadurch verändert werden, dass die relative Lage der zweiten Magnetelemente zu dem ersten Magnetelement einstellbar ist. Zur Änderung der Federkraft können auch andere, d.h. stärker und/oder schwächere Magnetelemente vorhandene Magnetelemente ersetzen. Werden beispielsweise Elektromagnete als erste und/oder zweite Magnetelemente eingesetzt, so könnten diese über die an den Elektromagnet angelegte elektrische Spannung gezielt verändert werden.

Die vorliegende Erfindung wird im Folgenden anhand mehrerer in einer Zeichnung dargestellter Ausführungsbeispiele näher erläutert. In der Zeichnung zeigen:
- Fig. 1: eine Seitenansicht einer ersten Ausführungsform eines magnetischen Bewegungswandlers,
- Fig. 2a und 2b: eine Seitenansicht und eine Draufsicht auf eine zweite Ausführungsform des Bewegungswandlers,
- Fig. 3: eine Seitenansicht einer dritten Ausführungsform des Bewegungswandlers,
- Fig. 4: eine Seitenansicht einer vierten Ausführungsform des Bewegungswandlers,
- Fig. 5a bis 5e: Draufsichten auf verschiedene Ausführungsformen einer Drehscheibe für den Bewegungswandler,
- Fig. 6a bis 6c: eine perspektivische Unteransicht, eine erste Seitenansicht und eine zweite Seitenansicht einer fünften Ausführungsform des Bewegungswandlers,
- Fig. 7a bis 7c: eine perspektivische Untersicht und zwei Draufsichten auf Ausführungsformen eines Magnetkernelementes mit Drehachse für den Bewegungswandler,
- Fig. 8: eine Seitenansicht einer sechsten Ausführungsform des Bewegungswandlers,
- Fig. 9a und 9b: eine Seitenansicht und eine Draufsicht einer siebten Ausführungsform des Bewegungswandlers,
- Fig. 10a und 10b: zwei Seitenansichten einer achten und neunten Ausführungsform des Bewegungswandlers,
- Fig. 11a und 11b: eine Seitenansicht und eine Draufsicht einer zehnten Ausführungsform des Bewegungswandlers und
- Fig. 12: eine perspektivische Seitenansicht mit mehreren gekoppelten Bewegungswandlern.

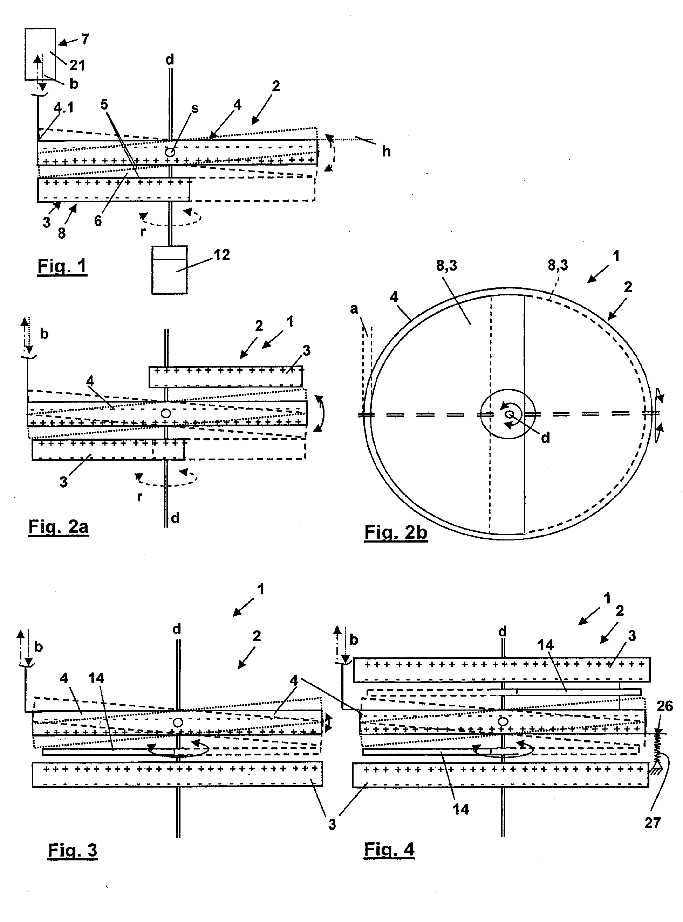

In den Figuren 1 bis 12 werden in verschiedenen Ansichten unterschiedliche Ausführungsformen eines magnetischen Bewegungswandlers 1 bzw. mehrere miteinander gekoppelte Bewegungswandler 1 zur Umwandlung einer Linearbewegung in eine Rotationsbewegung bzw. einer Rotationsbewegung in eine Linearbewegung sowie verschiedene Ausführungsformen einzelner Bauteile des magnetischen Bewegungswandlers 1 gezeigt.

Der Bewegungswandler 1 umfasst eine Magnetanordnung 2 mit relativ zueinander bewegbaren Magneten, mindestens einen ersten Magneten 3 und einen zweiten Magneten 4. Die Magnete 3,4 weisen mindestens jeweils eine magnetisch wirksame, als Magnetseitenfläche 5 ausgebildete Seitenfläche auf. Einander zugeordnete Magnetseitenflächen 5 weisen eine gleiche magnetische Polarität auf und begrenzen in einer zum Beispiel in den Figuren 1 bis 5 mit durchgezogenen Linien gezeigten Nullposition einen ebenen ungekrümmten Magnetspalt 6, so dass in dem Magnetspalt 6 ein hier nicht weiter eingezeichnetes Magnetfeld mit einander abstoßenden Kräften herrscht. Die Magnete 3,4 sind bereits erwähnte Kunststoff gebundene NdFeB-Magnete.

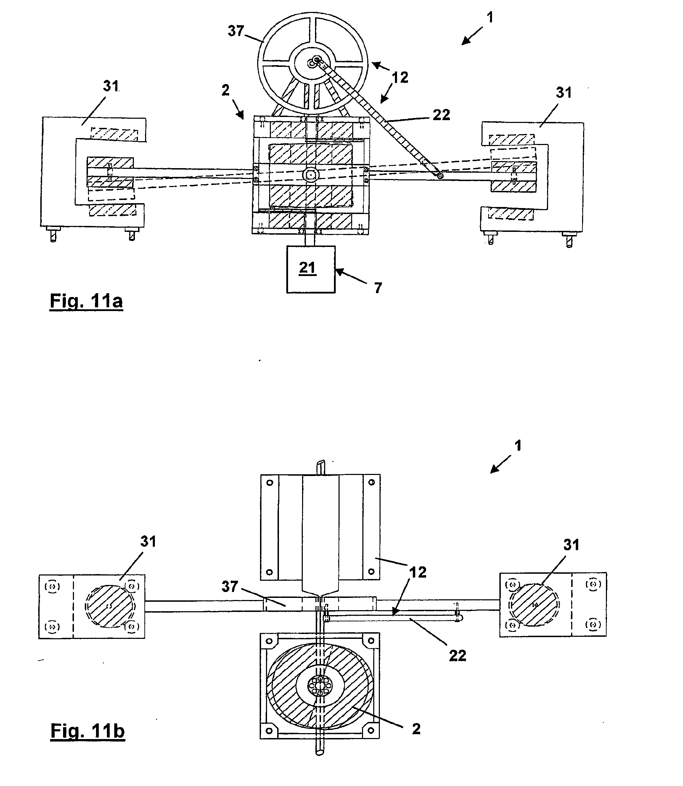

In allen hier gezeigten Ausführungsformen des Bewegungswandlers 1 ist der zweite Magnet 4 um eine Schwenkachse s verschwenkbar angeordnet, wobei die Schwenkachse s in Ebene seiner Magnetseitenfläche 5 verläuft. Der zweite Magnet 4 kann in den in den Figuren 1 bis 10 gezeigten Ausführungsformen des Bewegungswandlers 1 zur Umwandlung einer Hubbewegung b in eine Drehbewegung mittels eines einen Hub h erzeugenden Antriebes 7 hin und her verschwenkt werden. Die in Figuren 11a und 11b gezeigten Ausführungsform des Bewegungswandlers 1 ist ausgelegt, eine Drehbewegung in eine Schwenkbewegung umzuwandeln, die als Hubbewegung b abgenommen werden kann. Der Hub h und der Magnetspalt 6 sind so dimensioniert, dass der zweite Magnet 4 über seine Schwenkbewegung nicht unmittelbar gegen ein Bauteil des Bewegungswandlers 1 anschlägt. Der zweite Magnet 4 ist in allen Ausführungsformen ein flacher Kreiszylinder, dessen zumindest eine Stirnseite die Magnetseitenfläche 5 bildet.

In den beiden Ausführungsformen des Bewegungswandlers 1 gemäß den Figuren 1 und 2 ist der erste Magnet 3 als teilzylindrische Drehscheibe 8 ausgebildet, deren zumindest eine große Seitenfläche als Magnetseitenfläche 5 ausgebildet ist. Mögliche Ausführungsformen der Drehscheibe 8 als kreisförmige Drehscheibe 8 oder als kreisausschnittsartige, kreissegmentartige und/oder kreissektorartige Drehscheibe 8 werden weiter unten beschrieben. Die Drehscheibe 8 ist um eine Drehachse d senkrecht zur Magnetseitenfläche 5 und senkrecht zur Schwenkachse s drehbeweglich gelagert. Drehachse d und Schwenkachse s schneiden sich senkrecht. Die Magnetseitenfläche 5 des hier drehbar gelagerten ersten Magneten 3 weist hinsichtlich ihrer Erstreckung über den Magnetspalt 6 einen bezüglich zur Drehachse d exzentrischen Bereich 9 mit einer Ausnehmung 10 und/oder mit einer Magnetisierung 11 auf, die schwächer als die außerhalb des exzentrischen Bereiches 9 ist. Der erste Magnet 3 ist ebenfalls als Ringmagnet ausgebildet und ist in den Ausführungsformen gemäß Figuren 1 und 2 als Drehscheibe 8 mittig drehfest auf der Drehachse d gelagert. In den übrigen Ausführungsformen des Bewegungswandlers ist die Drehachse d drehbeweglich mittig durch den ersten Magneten 3 geführt.

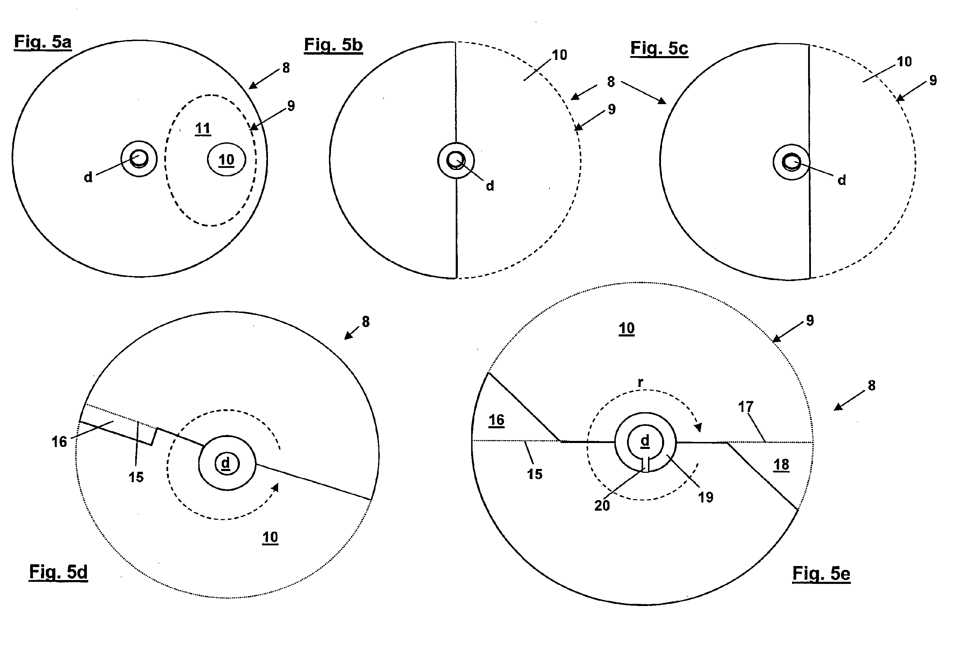

In Figur 1 ist eine besonders einfache Ausführungsform des Bewegungswandlers 1 mit einem drehbar gelagerten ersten Magnet 3 und einem schwenkbar gelagerten Magnet 4 dargestellt. In dieser sehr schematischen Seitenansicht des Bewegungswandlers 1 ist antriebsseitig ein Antrieb 7 zu Erzeugung der Hubbewegung b für die Schwenkbewegung des Zweitmagneten 4 und abtriebsseitig ein Abtrieb 12 dargestellt, der die Drehbewegung des ersten Magneten 3 über eine Übersetzung 13 abnimmt. Beide Magneten 3, 4 weisen eine kreiszylindrische Form mit Magnetseitenflächen 5 an ihren Stirnseiten auf, wobei der erste Magnet 3, wie in einer Aufsicht gemäß Figur 5 gezeigt, eine Ausnehmung 10 aufweist, die geometrisch die hier seitlich beschnittene kreiszylindrische Form des ersten Magneten 3 zu der hier gestrichelt angedeuteten gesamten Kreisform des ersten Magneten 3 ergänzt.

Der zweite Magnet 4 ist in Figur 1 sowie in den nachfolgenden Figuren 2 bis 4 neben seinem mit durchgezogenen Linien gekennzeichneten Ruheposition auch in einer der durch eine punktierte Linie angedeutete Verschwenkposition und in einer durch gestrichelte Linien angedeutete zweite Verschwenkposition gezeigt. Beide Verschwenkpositionen sind maximale Positionen, in denen gewährleistet ist, dass der zweite Magnet 4 lediglich soweit gegen den ersten Magneten 3 verschwenkt ist, dass ein ausreichender Schlupf zwischen den Magneten 3, 4 gewährleistet ist. In der Ruheposition sind die Magnete 3, 4 mit ihren Magnetseitenflächen 5 parallel zueinander angeordnet.

Mit Verschwenken des zweiten Magneten 4 gegen den ersten Magneten 3 aus der Ruheposition in die erste Schwenkposition werden die durch die gleiche Magnetisierung hervorgerufenen abstoßenden Kräfte des Magnetfeldes verstärkt, so dass der erste Magnet 3 zur Verminderung der Störung in den Magnetfeld zwischen den Magneten 3, 4 um die Drehachse d verdreht wird. Erreicht er seine hier durch gestrichelte Linien angedeutete um 180° verdrehte Position in der ersten Verschwenkposition des zweiten Magneten 4, so ist die Störung des Magnetfeldes minimiert. Es wirkt kein weiteres Drehmoment auf den ersten Magneten 3. Der erste Magnet 3 befindet sich in einem Todpunkt. Mittels seiner trägen Masse kann der erste Magnet seinen Todpunkt überwinden. Ähnlich einem einzylindrigen Verbrennungsmotor, so kann die antreibende Hubbewegung b bereits sehr kurz vor Erreichen der durch gestrichelte Linien dargestellten Position des ersten Magneten 3 umgekehrt werden, wodurch der zweite Magnet in Richtung auf seine zweite Verschwenkposition verschwenkt, entsprechend das Magnetfeld rechts der Drehachse d verdichtet und inhomogen wird und ein weiterer Drehimpuls auf den ersten Magneten 3 erzeugt wird. Sind erster Magnet 3 und zweiter Magnet 4 maximal gegeneinander bewegt, so wirkt ein maximaler Drehimpuls auf den ersten Magneten 3. Sind sie maximal voneinander verschwenkt, so ist der Drehimpuls gleich Null.

In Figur 2 ist eine zweite Ausführungsform des Bewegungswandlers 1 dargestellt. Die Magnetanordnung 2 weist hierbei zwei erste Magneten 3 und einen zweiten Magneten 4 auf, wobei die beiden ersten Magnete 3 beidseitig des zweiten Magneten 4 angeordnet sind und in Ruhelage mit dem zweiten Magneten 4 jeweils einen ebenen, ungekrümmten Magnetspalt 6 begrenzen. Die beiden ersten Magneten 3 sind bezüglich der Drehachse um 180° verdreht angeordnet. Somit kann mit Verschwenkung des zweiten Magneten 4 kontinuierlich ein Drehimpuls auf die ersten Magneten 3 bzw. auf die Drehachse d ausgeübt werden. Die ersten Magnete 3 sind gleich dem ersten Magnet 3 gemäß Figur 1 ausgebildet. Dies wird auch aus der Draufsicht auf den Bewegungswandler gemäß Figur 2 deutlich. Wie ferner der Figur 2 entnehmbar, weist der zweite Magnet 4 ein radialen Überstand a gegenüber der ersten Magneten 3 auf, um Randeffekte des Magnetfeldes in dem Magnetspalten 6 auf den ersten Magneten 3 zu vermindern.

Bei den im Weiteren vorgestellten Ausführungsformen des Bewegungswandlers 1 ist der erste Magnet 3 statisch angeordnet und weist eine gleiche Form wie der zweite Magnet 4 auf. Der zweite Magnet 4 ist, gleich wie in den vorhergehend beschriebenen Ausführungsformen der Magnetanordnung 2 um die Schwenkachse s in ebene Magnetseitenflächen 5 hin und her verschwenkbar angeordnet. In den Magnetspalt 6, der durch die beiden Magneten 3, 4 begrenzt wird, ist ein als Drehscheibe 8 ausgebildeten Magnetkernelement 14 vorgesehen, das um die Drehachse d senkrecht zu der Magnetseitenfläche 5 des ersten Magneten 3 drehbar angeordnet ist. Ähnlich wie der erste Magnet 3 in den in den Figuren 1 und 2 abgebildeten Ausführungsform des Bewegungswandlers 1, weist hier das Magnetkernelement 14 bezüglich seiner Erstreckung über den Magnetspalt 6 einen bezüglich zur Drehachse d exzentrischen Bereich 9 mit der Ausnehmung 10 und/oder mit einer Permeabilität auf, die schwächer als die außerhalb des exzentrischen Bereiches 9 ist.

In Figur 3 ist eine einfache Ausführungsform des Bewegungswandlers 1 mit einem ersten Magnet 3 und einem zweiten Magnet 4, die, in einer Nullposition des zweiten Magneten 4 mit ihren Magnetseitenflächen 5 parallel zueinander angeordnet sind und einen ebenen, ungekrümmten Magnetspalt 6 begrenzen. Aufgrund der gleichen Formen der beiden Magneten 3, 4 und einer vorgesehenen gleichen Polarisierung und Magnetisierung ihrer Magnetseitenflächen 5 bildet sich im Magnetspalt 6 ein hier nicht weiter dargestelltes, symmetrisches Magnetfeld aus, das infolge des exzentrischen Bereiches 9 des Magnetkernelementes 14 in Magnetspalt 6 gestört wird. Hierdurch wird mit einer Schwenkbewegung des zweiten Magneten 4, ähnlich wie in den Ausführungsformen gemäß den Figuren 1 und 2 auf den ersten Magnet 3, hier auf das Magnetkernelement 14 ein Drehmoment ausgeübt, wodurch das Magnetkernelement 14 um die Drehachse d bewegt wird. Ähnlich wie in der Ausführungsform des Bewegungswandlers 1 gemäß Figur 1, so sind hier mit den hier ebenfalls eingezeichneten maximalen Verschwenkpositionen des zweiten Magneten 4 (erste Verschwenkposition mit gepunkteter Linie und zweite Verschwenkposition mit gestrichelter Linie), abhängig von der Verschwenkposition des zweiten Magneten 4, jeweils eine Position mit minimalem Drehmoment (Todpunkt) und eine Position mit maximalen Drehmoment verbunden. Eine maximale Beschleunigung des Magnetkernelementes 14 tritt dann auf, wenn sich das Magnetkernelement 14 in dem Bereich des Magnetspaltes 6 befindet, in dem der zweite Magnet 4 maximal gegen den ersten Magnet 3 verschwenkt ist. Entsprechend befindet sich das Magnetkernelement 14 in einem Todpunkt, wenn es sich in dem Bereich des Magnetspaltes 6 befindet, in dem der zweite Magnet 4 maximal von dem ersten Magneten 3 wegverschwenkt ist. Der Todpunkt kann durch das Trägheitsmoment des Magnetkernelementes 14 überwunden werden.

In Analogie zur Ausführungsform des Bewegungswandlers 1 gemäß Figur 2 wird in Figur 4 eine Ausführungsform des Bewegungswandlers 1 gezeigt, in der zwei erste Magnete 3 und einer zwischen den beiden ersten Magneten 3 verschwenkbar gelagerter zweiter Magnet 4 vorgesehen sind, wobei die Magnete 3, 4 zwei Magnetspalte 6 begrenzen, in denen jeweils ein Magnetkernelement 14 drehbar angeordnet ist. Die beiden Magnetkernelemente 14 sind ebenfalls auf der Drehachse d drehfest gelagert und um einen Drehwinkel von 180 ° voneinander versetzt angeordnet.

Bei allen vorgestellten Ausführungsformen des Bewegungswandlers 1 ist die besondere Ausbildung der Drehscheibe 8, zu der in den Ausführungsformen gemäß Figur 1 und 2 der erste Magnet 3 und in den Ausführungsformen der Figuren 3 und 4 das Magnetkernelement 14 ausgebildet sind, entscheidend für den Drehimpuls, da durch diese Ausbildung ein ansonsten symmetrisch ausgelegtes Magnetfeld gestört wird. Wie bereits ausgeführt, kann der exzentrische Bereich 9 der Drehscheibe 8 eine Ausnehmung 10 aufweisen und/oder eine Magnetisierung 11 (erster Magnet 3) bzw. eine Permeabilität (Magnetkernelement 14) aufweisen, die verschieden von der außerhalb des externen Bereiches 9 und hier in den vorgestellten Ausführungsform des Bewegungswandlers 1 schwächer als die außerhalb des externen Bereiches 9 ist. Dieser Sachverhalt wird ganz schematisch in Figur 5a mit einer Draufsicht auf die Drehscheibe 8 dargestellt, wobei hier die Drehscheibe 8 in den exzentrischen Bereichen 9 eine Ausnehmung 10 und eine schwächere Magnetisierung 11 aufweist. Hierbei ist die schwächere Magnetisierung 11 nicht gesondert kenntlich gemacht worden. In Figur 5b ist die Ausnehmung 10 so groß, dass die Drehscheibe 8 faktisch als Halbkreiszylinder ausgebildet ist.

In Figur 5d und e sind Ausbildungsformen der Drehscheibe 8 wiedergegeben, die bezüglich einer Symmetrieachse senkrecht zur vorgesehenen Drehachse g unsymmetrisch sind. Dadurch kann in Betrieb der Drehscheibe 8 in den Bewegungswandler 1 ein entsprechend unsymmetrisches Drehmoment auf die Drehscheibe 8 ausgeübt werden, das die Drehscheibe 8 in eine bevorzugte Drehrichtung r bringt. Hierzu weist die Drehscheibe 8 an einer bezüglich ihrer vorgesehenen Drehrichtung r um die Drehachse d hinteren Seite 15 einen sich in Drehrichtung r erstreckenden Vorsprung 16 auf. Der Vorsprung 16 ist radial außen an der Drehscheibe 8 vorgesehen, um ein maximales Drehmoment zu erzielen. Der Vorsprung 16 ist hier über seine radiale Erstreckung etwa gleichbleibend breit ausgebildet. Nachteilig an dieser Ausführungsform verursachte der Vorsprung 16 eine "Unwucht", die einen Gleichlauf der Drehscheibe beeinträchtigt. Ein größerer Gleichlauf der Drehscheibe kann durch ihre Ausbildung gemäß Figur 5e erzielt werden. Hier ist zusätzlich zu dem Vorsprung 16 an der hinteren Seite 15 an der in Drehrichtung r vorderen Seite 17 ein Wegschnitt 18 vorgesehen, wobei der Vorsprung 16 und Wegschnitt 18 um 180 Grad versetzt zueinander angeordnet sind. Durch den Wegschnitt 18 wird an dieser Stelle ein entsprechend geringeres Drehmoment entgegen der Drehrichtung r erzeugt, wodurch das Gesamtdrehmoment in Drehrichtung r verstärkt wird. Alle Drehscheiben gemäß den Figuren 5a bis e weisen im Mittelpunkt eine Hülse 19 auf, mittels derer die Drehscheibe 8 drehfest auf der Drehachse d fixierbar ist. Hierzu weist die Hülse 19 eine lediglich in Figur 5e dargestellte Nut auf, wobei vorgesehen ist, dass eine an der Drehachse entsprechend vorgesehene und hier nicht weiter dargestellte Feder in Einbaulage der Drehscheibe 8 in die Nut 20 eingreift.

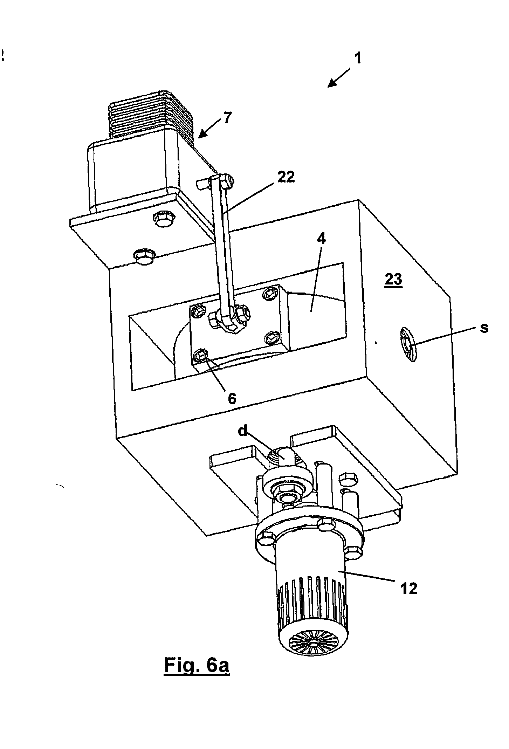

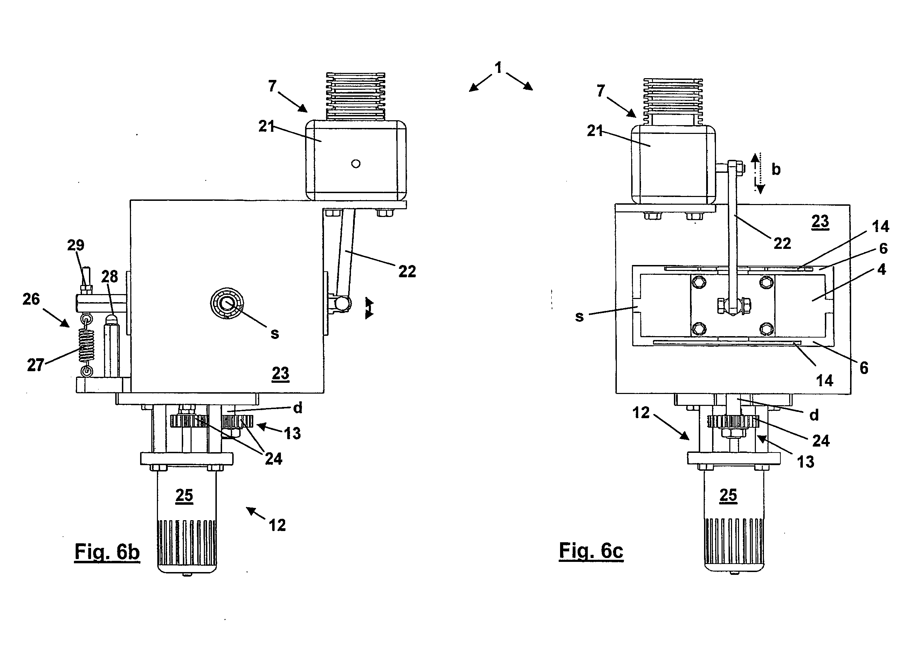

In den Figuren 6a bis 6c wird eine Ausführungsform des Bewegungswandlers 1 in verschiedenen Ansichten wiedergegeben, welche vom Prinzip her derjenigen in Figur 4 entspricht, deren Bauelemente aber detaillierter wiedergegeben sind. Der Antrieb 7 weist einen Motor 21 auf, der über ein Gestänge 22 die Hubbewegung b auf einen ersten Abschnitt 4.1 des zweiten Magneten 4 überträgt. Der zweite Magnet 4 ist hier als ringförmiger Doppelmagnet ausgebildet und in einem Gehäuse 23 verschwenkbar gelagert. Das Gehäuse 23 ist zur Bündelung und Konzentration der Magnetfeldlinien in dem Bewegungswandler 1 hier als magnetisches Joch ausgebildet. In dem Gehäuse 23 sind jeweils beidseitig des zweiten Magneten 4 zwei hier durch das Gehäuse 23 verdeckte erste Magnete 3 eingelassen und in dem Gehäuse 23 fixiert. Die beiden ersten Magnete 3 und der zweite Magnet 4 begrenzen jeweils einen Magnetspalt 6, in dem jeweils das Magnetkernelement 14 als Drehscheibe 8 angeordnet ist, wobei die Drehscheibe 8 auf der Drehachse d verdrehfest gelagert sind. Die Drehachse d ist in dem Gehäuse 23 gelagert und mittig berührungsfrei durch den ringförmigen zweiten Doppelmagnet 4 geführt. Die abtriebseitig vorgesehene Übersetzung 13 weist ineinander greifende Zahnräder 24 auf, mittels derer ein hier beispielgebend als Generator 25 ausgebildeter Abtrieb 12 angetrieben wird.

Zusätzlich, wie auch in Figur 4 bereits angedeutet, ist an der bezüglich der Schwenkachse s zum Gestänge 22 gegenüberliegenden Seite eine Federverrichtung 26 mit einer Schraubenzugfeder 27 vorgesehen, wobei die Schraubenzugfeder 27 an einem zweiten Abschnitt 4.2 an dem zweiten Magneten 4 federwirksam angreift. Über dem Motor 21 wird auf das Gestänge 22 ein Impuls in Richtung vom Motor 21 weg auf den zweiten Magneten 4 ausgeübt, wodurch die Schraubenzugfeder 27 entsprechend ausgelenkt wird. Mit Erreichen der ersten Verschwenkposition gemäß Figur 4 kehrt die Hubbewegung b um, wobei die in der Schraubenzugfeder 27 gespeicherte Federenergie in die Bewegung eingespeist wird. Somit muss über den Motor 21 lediglich eine stoßende Bewegung zum zweiten Magneten 4 hin auf denselben ausgeübt werden, wobei die Rückbewegung durch die Schraubenzugfeder 27 bewirkt wird. Zur Begrenzung der Hubbewegung b ist, wie in Figur 6d ersichtlich ein Anschlag 28 vorgesehen. Zur Einstellung der Federkraft der Schraubenzugfeder 27 bzw. der Vorspannung der Schraubenzugfeder 27 ist eine Einstellvorrichtung 29 vorgesehen, mittels derer die Schraubenzugfeder 27 in ihrer Längsrichtung vorgespannt wird und mittels Schraubenkonterung in gewünschter Position fixiert werden kann.

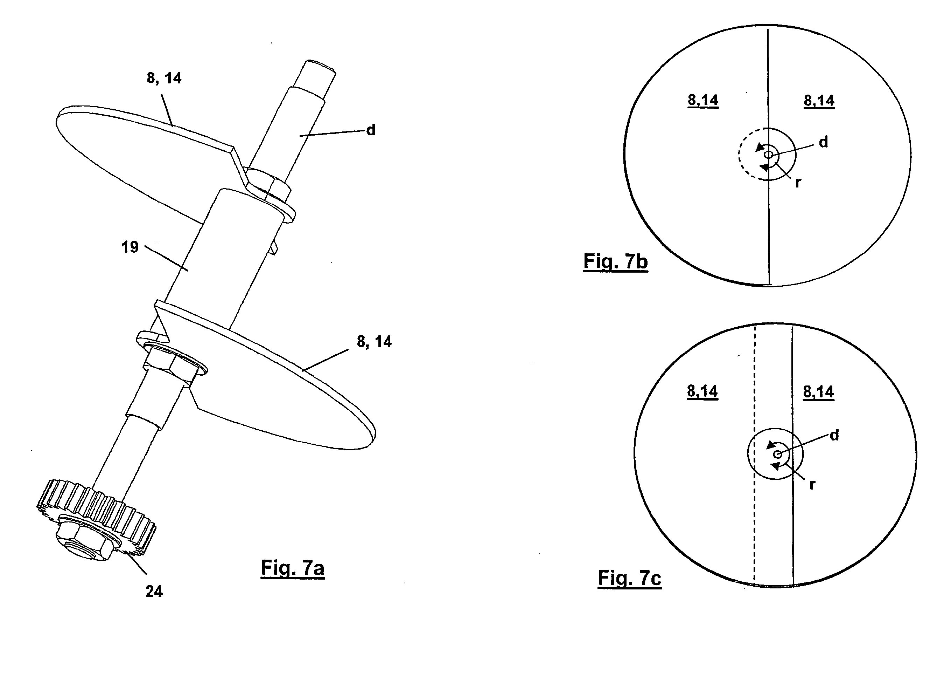

In Figuren 7a und b ist zur Verdeutlichung der Anordnung der Drehscheiben 8 bzw. der Magnetkernelemente 14 die Drehachse d mit den Magnetkernelementen 14 und dem Abtriebsseitig vorgesehenen Zahnrad 24 gesondert dargestellt. Hierbei sind die beiden Magnetkernelemente 14 bezüglich der Drehachse d um 180 Grad versetzt zueinander angeordnet. Figur 7b zeigt eine stark schematisierte Draufsicht auf die Drehachse d mit den Magnetkernelementen 14, wobei die Magnetkernelemente 14 etwa halbkreisförmig aufgebaut sind. In Figur 7c ist eine weitere Ausführungsform der Drehachse d mit den Magnetkernelementen 14 in einer Draufsicht gezeigt, wobei die Magnetkernelemente 14 etwas größer als halbkreisformatig sind und sich hierdurch mittig überlappen.

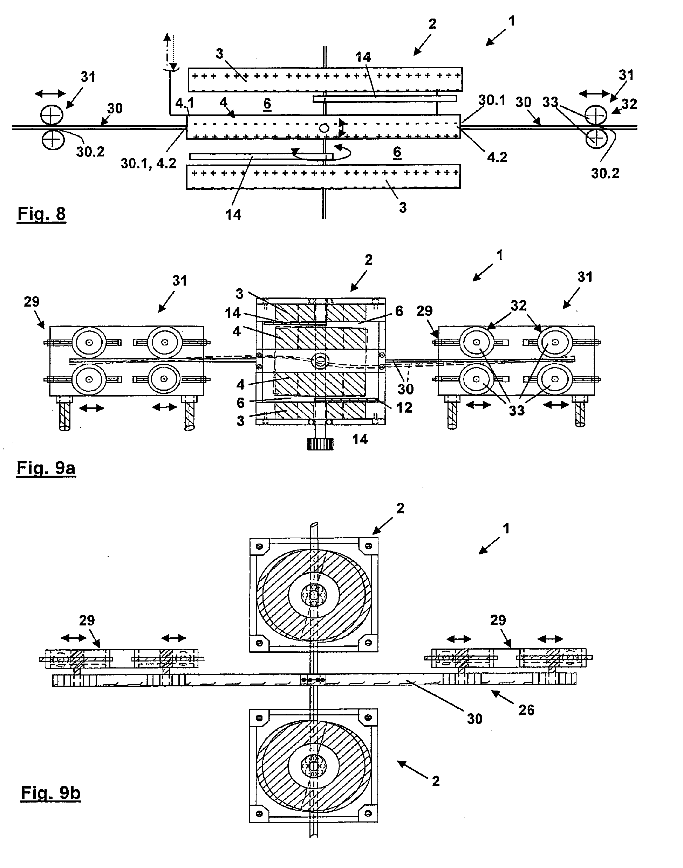

In den Figuren 8 bis 10 sind beispielgebend insbesondere unterschiedliche Formen der Federvorrichtung 26 wiedergegeben. Hierbei weist die Federvorrichtung 26 zwei längliche Blattfedern 30 auf, die sich beidseitig senkrecht zur Schwenkachse s und der Drehachse d längserstrecken und, gemäß Figur 8, mit einem ersten Endbereich 30.1 jeweils an einem zweiten Abschnitt 4.2 des zweiten Magneten 4 angreifen, während sie mit einem zweiten Endbereich 30.2 in einem Widerlager 31 widergelagert sind. Das Widerlager 31 weist in den Ausführungsformen gemäß den Figuren 8 und 9 mindestens ein Rollenpaar 32 auf, dass in Längsachse der Blattfeder 30 längsverschiebbar ist, wodurch eine wirksame Federlänge f der Blattfeder 30 und damit der Federkraft einstellbar ist. In den Ausführungsformen gemäß Figur 9 sind pro Blattfeder 30 zwei Rollenpaare 32 vorgesehen, die unabhängig voneinander in Längserstreckung der Blattfeder 30 verschiebbar sind. Die jeweiligen Rollen 33 der Rollenpaare 32 sind so voneinander beabstandet angeordnet, dass die Blattfeder 30 mit großem Spiel zwischen den Rollenpaaren 32 bewegbar ist.

In Figur 9 ist eine Ausbildungsform des magnetischen Bewegungswandlers 1 gezeigt, in dem zwei Magnetanordnungen 2 so zueinander angeordnet sind, dass die beiden zweiten Magnete 4 der beiden Magnetanordnungen 2 über eine gemeinsame Schwenkachse s miteinander verbunden sind, während die Magnetkernelemente 14 jeweils auf einer einzelnen Drehachse d angeordnet sind. Durch diese Anordnung kann eine durch einen in Figur 9 nicht eigens dargestellten Antrieb erzeugte Schwenkbewegung b auf zwei Drehachsen a übertragen werden. Die zuvor beschriebenen Ausführungsformen des Bewegungswandlers 1, gemäß denen mehrere, d. h. hier jeweils zwei, Drehscheiben 8, auf einer gemeinsamen Drehachse d angeordnet sind, die gemeinsam von einem einzigen zweiten Magneten 4 angetrieben werden, kann als eine Hintereinanderschaltung von Drehscheiben 8 bezeichnet werden. In Analogie hierzu kann die Anordnung der Magnetanordnungen 2 in der Ausführungsform gemäß Figur 9 als Parallelschaltung von Drehachsen d bezeichnet werden.

Wie insbesondere in Figur 9b ersichtlich, wirkt die Federvorrichtung 26 über die beiden Blattfedern 30 für beide Magnetanordnungen 2 unmittelbar auf die Schwenkachse s, welches zugleich eine bauliche Vereinfachung eines Bewegungswandlers 1 mit mehreren, "parallel angeordneten" Magnetanordnungen 2 darstellt. Denkbar, aber hier nicht weiter ausgeführt, ist eine Vielzahl von Magnetanordnungen, die entsprechend parallel zueinander angeordnet sind.

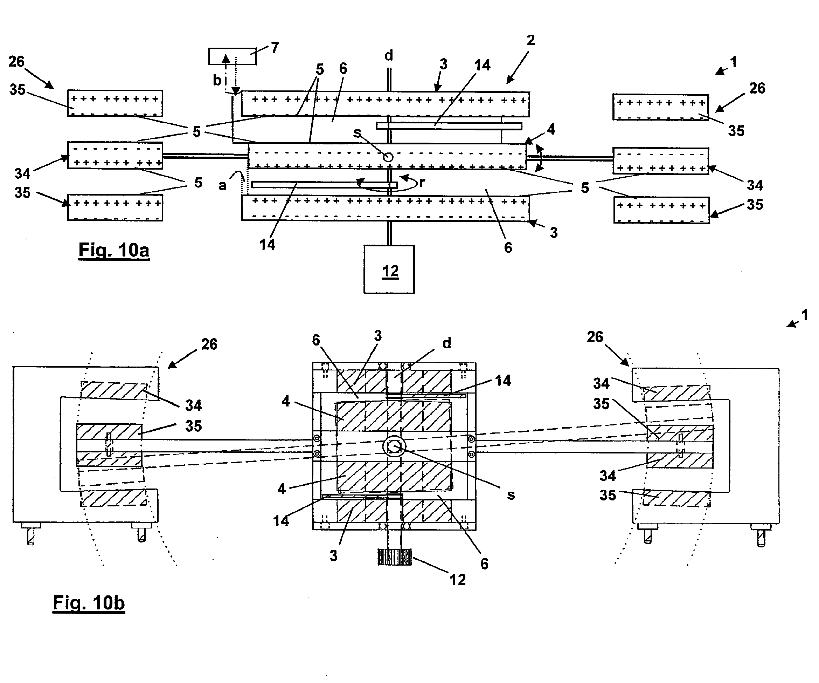

In Figur 10 sind die Blattfedern 30 der Vorrichtung 26 in ihrem zweiten Endabschnitt 30.2 magnetisch und damit berührungslos widergelagert, wodurch eine besonders verlustfreie Widerlagerung erzielt wird. Hierzu weisen die Blattfedern 30 in ihrem zweiten Endbereich 30.2 jeweils ein plattenförmiges erstes Magnetelement 34 mit zwei als Magnetseitenflächen 5 ausgebildeten großen Seitenflächen auf. Beabstandet zu den Magnetseitenflächen 5 der ersten Magnetelemente 2 sind jeweils ein zweites Magnetelement 35 vorgesehen, das eine dem ersten Magnetelement zugewandte Magnetseitenfläche 5 gleicher magnetischer Polarität wie die der Magnetseitenfläche 5 des ersten Magnetelementes 34 aufweist. Somit bilden sich zwischen den Magnetelementen 34, 35 bekanntermaßen hier nicht dargestellte Magnetfelder mit abstoßenden Kräften auf, wodurch mit dem Verschwenken des zweiten Magneten 4 eine magnetische Widerlagerung erfolgen kann. In der Ausführungsform des Bewegungswandlers 1 gemäß Figur 10b sind die Magnetelemente 34, 35 auf einem hier gestrichelt eingezeichneten Umfangkreis zur Schwenkachse 5 so zueinander angeordnet, dass deren Magnetseitenflächen 5 über das Verschwenken des zweiten Magneten 4 parallel gegeneinander geführt werden. In dieser Ausführungsform des Bewegungswandlers 1 weisen die Blattfedern 30 eine sehr hohe Steifigkeit auf, so dass mit Verschwenkung des zweiten Magneten 4 keine merkliche Durchbiegung der Blattfeder 30 erfolgt.

In den vorhergehenden Ausführungsbeispielen wurde jeweils der zweite Magnet 4 über den Antrieb 7 verschwenkt und erzeugte hierdurch eine Drehbewegung der als erster Magnet 3 oder als Magnetkernelement 14 ausgebildeten Drehscheibe 8. Zur Verdeutlichung der Funktionsweise des Bewegungswandlers 1 ist in Figur 11 eine Ausführungsform desselben wiedergegeben, in der eine Drehbewegung der Drehscheibe 8 in eine Schwenkbewegung des zweiten Magneten 4 umgewandelt werden kann. Hierzu wird die Drehachse d über einen hier nicht dargestellten Antrieb gedreht, wodurch, infolge der zuvor beschriebenen Magnetanordnung 2, der zweite Magnet 4 in eine Schwenkbewegung versetzt wird. Diese Schwenkbewegung des zweiten Magneten 4 kann über ein Gestänge 36, das exzentrisch an eine Schwingscheibe 37 angreift, wieder in eine Drehbewegung b umgewandelt werden.

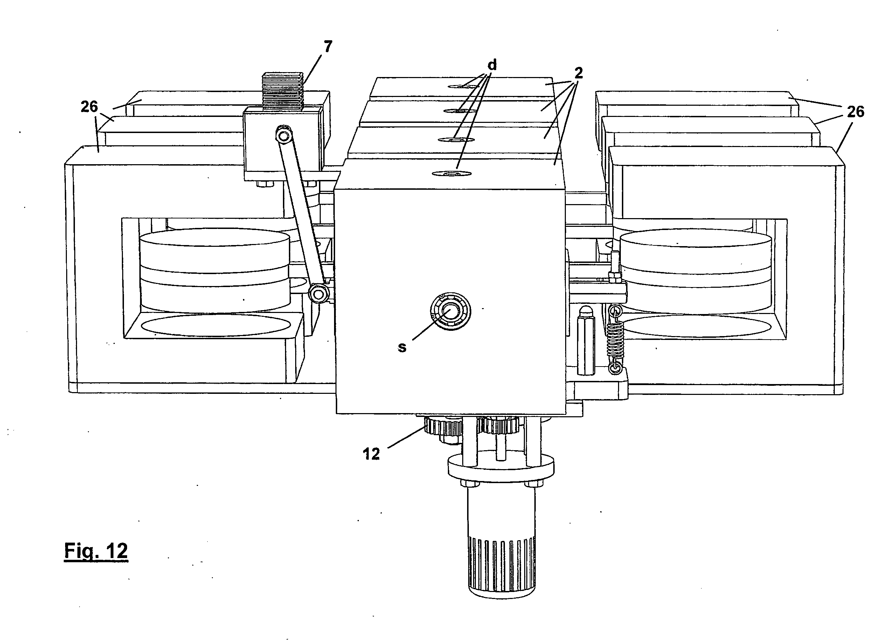

Figur 12 zeigt eine perspektivische Seitenansicht mit mehreren mit einander gekoppelten Bewegungswandlern 1. Diese werden in diesem Ausführungsbeispiel von einem Antrieb 7 angetrieben, sind auf einer gemeinsamen Schwenkachse s angeordnet und wirken jeweils auf eine zugehörige Drehachse d. Somit sind sie in dieser Konfiguration abtriebsseitig parallel zueinander angeordnet. Es kann eine Verteilung der durch den Antrieb 7 eingespeisten Bewegungsenergie auf die Drehachsen d erfolgen. Es können gleichzeitig Drehmomente auf mehreren Drehachsen übertragen werden. Die Anordnungen können, was hier nicht gezeigt ist, bezüglich der Drehachse in Reihe zueinander verknüpft sein, so dass sie auf eine gemeinsame Drehachse d wirken. Somit kann ein die Drehachse d wirkendes Drehmoment verstärken werden. Mit einer Phasenversetzung der Kraftimpulse der einzelnen Bewegungswandler auf die Drehwelle, welches hier nicht gezeigt ist, können die einzelnen Bewegungswandler entsprechend phasenversetzt auf die Drehwelle einwirken, so dass eine größere Laufruhe erzielbar ist.

### Bezugszeichenliste

- 1: Bewegungswandler
- 2: Magnetanordnung
- 3: erster Magnet
- 4: zweiter Magnet
- 4.1: erster Abschnitt
- 4.2: zweiter Abschnitt
- 5: Magnetseitenfläche
- 6: Magnetspalt
- 7: Antrieb
- 8: Drehscheibe
- 9: Bereich
- 10: Ausnehmung
- 11: Magnetisierung
- 12: Abtrieb
- 13: Übersetzung
- 14: Magnetkernelement
- 15: Seite
- 16: Vorsprung
- 17: Seite
- 18: Wegschnitt
- 19: Hülse
- 20: Nut
- 21: Motor
- 22: Gestänge
- 23: Gehäuse
- 24: Zahnrad
- 25: Generator
- 26: Federvorrichtung
- 27: Schraubenzugfeder
- 28: Anschlag
- 29: Einstellvorrichtung
- 30: Blattfeder
- 30.1: erster Endbereich
- 30.2: zweiter Endbereich
- 31: Widerlager
- 32: Rollenpaar
- 33: Rolle
- 34: erstes Magnetelement
- 35: zweites Magnetelement
- 36: Gestänge
- 37: Schwungscheibe
- a: Überstand
- b: Hubbewegung
- d: Drehachse
- h: Hub
- s: Schwenkachse
- r: Drehrichtung

## Patentansprüche

1. Magnetischer Bewegungswandler zur Umwandlung einer Linearbewegung in eine Rotationsbewegung bzw. einer Rotationsbewegung in eine Linearbewegung mittels einer Magnetanordnung, die relativ zueinander bewegbare Magnete aufweist,
wobei ein erster Magnet (3) und ein zweiter Magnet (4) mit jeweils einer magnetisch wirksamen, als Magnetseitenfläche (5) ausgebildeten Seitenfläche vorgesehen sind und in einer Nullposition einen ebenen Magnetspalt (6) begrenzen,
der erste Magnet (3) um eine Drehachse (d) senkrecht zu seiner Magnetseitenfläche (5) drehbar und der zweite Magnet (4) um eine Schwenkachse (s) senkrecht zu der Drehachse (d) hin und her verschwenkbar angeordnet sind,
die Magnetseitenfläche (5) des ersten Magneten (3) hinsichtlich ihrer Erstreckung über den Magnetspalt (6) eine nicht-kreisförmigen Form und/oder einen bezüglich zur Drehachse (d) exzentrischen Bereich (9) mit einer Ausnehmung (10) und/oder mit einer Magnetisierungsstärke aufweist, die abweichend von der außerhalb des exzentrischen Bereiches (9) ist, **dadurch gekennzeichnet, dass** die Magnetseitenflächen (5) der Magnete (3,4) eine gleiche magnetische Polarität aufweisen, die Magnetseitenfläche (5) des zweiten Magneten (4) bezüglich ihrer Erstreckung über den Magnetspalt (6) kreisrund ausgebildet ist sowie
der zweite Magnet (4) als Kreisscheibe und der erste Magnet (3) als kreisausschnittsartige, kreissegmentartige und/oder kreissektorartige Drehscheibe (8) ausgebildet sind, die an einer bezüglich ihrer vorgesehenen Drehrichtung (r) um die Drehachse (d) hinteren Seite (15) einen sich in Drehrichtung (r) erstreckenden Vorsprung (16) und/oder an einer bezüglich ihrer vorgesehenen Drehrichtung (r) um die Drehachse (d) vorderen Seite (17) eine sich in Drehrichtung (r) erstreckende Ausnehmung, wie Durchgangsöffnung, Einschnitt oder Wegschnitt (18), aufweist.

2. Magnetischer Bewegungswandler zur Umwandlung einer Linearbewegung in eine Rotationsbewegung bzw. einer Rotationsbewegung in eine Linearbewegung mittels einer Magnetanordnung, die relativ zueinander bewegbare Magnete aufweist,
wobei ein erster Magnet (3) und ein zweiter Magnet (4) mit jeweils einer magnetisch wirksamen als Magnetseitenfläche (5) ausgebildeten Seitenfläche vorgesehen sind, die in einer Nullposition einen ebenen Magnetspalt (6) begrenzen, wobei die Magnetseitenfläche (5) bezüglich ihrer Erstreckung über den Magnetspalt (6) der Magneten (3, 4) kreisrund ausgebildet ist,
der zweite Magnet (4) um eine Schwenkachse (s) in Ebene der Magnetseitenfläche (5) des ersten Magneten (3) hin und her verschwenkbar ist, **dadurch gekennzeichnet, dass** die Magnetseitenfläche (5) eine gleiche magnetische Polarität aufweist, der erste Magnet (3) statisch angeordnet ist, beide Magnete (3, 4) als zylindrische Kreisscheibe ausgebildet sind,
ein im Magnetspalt (6) vorgesehenes Magnetkernelement (14) um eine Drehachse (d) senkrecht zu der Magnetseitenfläche (5) des ersten Magneten (3) drehbar angeordnet ist, wobei das Magnetkernelement (14) bezüglich seiner Erstreckung über den Magnetspalt (6) eine nicht-kreisförmige Form aufweist und/oder einen bezüglich zur Drehachse (d) exzentrischen Bereich (9) mit einer Ausnehmung (10) und/oder mit einer Permeabilität umfasst, die abweichend von der außerhalb des exzentrischen Bereiches (9) ist, und das Magnetkernelement (14) als kreisausschnittsartige, kreissegmentartige und/oder kreissektorartige teilzylindrische Drehscheibe (8) ausgebildet ist, die an einer bezüglich ihrer vorgesehenen Drehrichtung (r) um die Drehachse (d) hinteren Seite (15) einen sich in Drehrichtung (r) erstreckenden Vorsprung (16) und/oder an einer bezüglich ihrer vorgesehenen Drehrichtung (r) um die Drehachse (d) vorderen Seite (17) eine sich in Drehrichtung (r) erstreckende Ausnehmung, wie Durchgangsöffnung, Einschnitt oder Wegschnitt (18), aufweist.

3. Magnetischer Bewegungswandler nach Anspruch 1 oder 2, **dadurch gekennzeichnet, dass** sich Schwenkachse (5) und Drehachse (d) schneiden.

4. Magnetischer Bewegungswandler nach Anspruch 1 oder 2, **dadurch gekennzeichnet, dass** der Mittelpunktswinkel der kreisausschnittsartige, kreissegmentartigen und/oder kreissektorartigen Drehscheibe (8) größer 120° ist.

5. Magnetischer Bewegungswandler nach einem der Ansprüche 1 bis 4, **dadurch gekennzeichnet, dass** die eine Beabstandung im Magnetspalt (6) in der Nullposition zwischen dem ersten Magnet (3) und dem zweiten Magnet (4) oder zwischen dem zweiten Magnet (4) und dem Magnetkernelement (14) wenig größer als ein vorgesehener maximaler Hub (h) des zweiten Magneten (4) aus seiner Nullposition in eine vorgesehene maximale Schwenkposition ist.

6. Magnetischer Bewegungswandler nach einem der Ansprüche 1 bis 5, **dadurch gekennzeichnet, dass** zwei erste Magnete (3) und ein zweiter Magnet (4) vorgesehen sind, wobei der zweite Magnet (4) zwischen den ersten Magneten (3) positioniert ist und jeweils mit einem ersten Magnet (3) einen Magnetspalt (6) begrenzt.

7. Magnetischer Bewegungswandler nach Anspruch 6, **dadurch gekennzeichnet, dass** in jedem Magnetspalt (6) ein um die Drehachse (d) drehbar gelagertes Magnetkernelement (14) angeordnet ist, wobei die Magnetkernelemente (14) bezüglich ihrer exzentrischen Bereiche (9) um einen Drehwinkel von 180° versetzt voneinander angeordnet sind.

8. Magnetischer Bewegungswandler nach einem der Ansprüche 1 bis 7, **dadurch gekennzeichnet, dass** ein Motor (21) getriebener Antrieb (7) zur Erzeugung der Schwenkbewegung (b) oder der Drehbewegung vorgesehen ist, wobei der Antrieb (7) eine Federvorrichtung (26) aufweist, die in Richtung des Hubes (h) in einem von der Schwenkachse (s) beabstandeten zweiten Abschnitt (4.2) auf den zweiten Magneten (3) wirkt.

9. Magnetischer Bewegungswandler nach Anspruch 8, **dadurch gekennzeichnet, dass** die Federvorrichtung (26) mindestens eine längliche Blattfeder (30) aufweist, die sich senkrecht zur Schwenkachse (s) und zur Drehachse (d) längserstreckt sowie mit einem ersten Endbereich (30.1) an dem zweiten Abschnitt (4.2) des zweiten Magneten (4) und mit einem zweiten Endbereich (30.2) federwirksam widergelagert ist.

10. Magnetischer Bewegungswandler nach Anspruch 9, **dadurch gekennzeichnet , dass** die Lagerung im zweiten Endbereich (30.2) der Blattfedern (30) berührungslos mittels einer magnetischen Federung ausgebildet ist.

11. Magnetischer Bewegungswandler nach Anspruch 9 oder 10, **dadurch gekennzeichnet, dass** die Federkraft der Federvorrichtung (26) einstellbar ist.

## Claims

1. Magnetic movement converter for converting a linear movement into a rotary movement or a rotary movement into a linear movement by means of a magnet arrangement comprising magnets which are movable relative to each other, wherein
there are provided a first magnet (3) and a second magnet (4) each having a magnetically effective lateral surface formed as a magnet lateral surface (5) and in a zero position delimiting a plane magnetic gap (6),
the first magnet (3) is arranged so as to be rotatable about an axis of rotation (d) perpendicular to its magnet lateral surface (5) and the second magnet (4) is arranged so as to be pivotable to and fro about a pivot axis (s) perpendicular to the axis of rotation (d),
the magnet lateral surface (5) of the first magnet (3) presenting a non-circular shape with respect to its extension over said magnetic gap (6) and/or an eccentric part (9) with respect to its axis of rotation, said eccentric part having a recess (10) or a magnetization intensity differing from that outside of the eccentric part (9), **characterized in that** the magnet lateral surfaces (5) have an equal magnetic polarity, the magnet lateral surface (5) of the second magnet (4) is circular with respect to the extension thereof over the magnetic gap (6) and
the second magnet (4) is formed as a circular disc and the first magnet (3) is formed as rotary disc (8) similar to a section of a circle, a segment of a circle and/or a sector of a circle, wherein the rotary disc (8) includes on its side which is the rear side (15) with respect to its intended direction of rotation (r) about the axis of rotation (d) a projection (16) extending in the direction of rotation and/or includes on its side which is the front side (17) with respect to its intended direction of rotation (r) about the axis of rotation (d) a recess extending in the direction of rotation (r), such as a through-hole, an incision or a cut-off part (18).

2. Magnetic movement converter for converting a linear movement into a rotary movement or a rotary movement into a linear movement by means of a magnet arrangement comprising magnets which are movable relative to each other, wherein
there are provided a first magnet (3) and a second magnet (4) each having a magnetically effective lateral surface formed as a magnet lateral surface (5) delimiting in a zero position a plane magnetic gap (6), wherein the magnet lateral surface (5) is formed so as to be circular with respect to the extension thereof over the magnetic gap (6) of the magnets (3, 4),
the second magnet (4) is pivotable to and fro about a pivot axis (a) in a plane of the magnet lateral surface (5) of the first magnet (3),
**characterized in that** the magnet lateral surface (5) has an equal magnetic polarity, the first magnet is arranged in a stationary manner, both magnets (3, 4) are configured as a cylindrical circular disc,
a magnetic core element (14) provided within the magnetic gap (6) is arranged so as to be rotatable about an axis of rotation (d) perpendicular to the magnet lateral surface (5) of the first magnet, wherein said magnetic core element (14) has a non-circular shape with respect to the extension thereof over the magnetic gap (6) and/or comprises an eccentric part (9) with respect to the axis of rotation (d), said eccentric part having a recess (10) and/or a permeability different from that outside of the eccentric part (9), and the magnetic core element (14) being configured as a rotary disc (8) in the form of a section of a circle, a segment of a circle and/or a sector of a circle, wherein the rotary disc (8) includes on its side which is the rear side (15) with respect to its intended direction of rotation (r) about the axis of rotation (d) a projection (16) extending in the direction of rotation and/or includes on its side which is the front side (17) with respect to its intended direction of rotation (r) about the axis of rotation (d) a recess extending in the direction of rotation (r), such as a through-hole, an incision or a cut-off part (18).

3. Magnetic movement converter according to claim 1 or 2, **characterized in that** the pivot axis (5) and the axis of rotation (d) are intersecting.

4. Magnetic movement converter according to claim 1 or 2, **characterized in that** the central angle of the rotary disc (8) being in the form of a section of a circle, a segment of a circle and/or a sector of a circle is larger than 120°.

5. Magnetic movement converter according to one of the claims 1 to 4, **characterized in that** said one spacing in the magnetic gap (6) in the zero position between the first magnet (3) and the second magnet (4) or between the second magnet (4) and the magnetic core element (14) is little larger than a provided maximum stroke (h) of the second magnet (4) from its zero position to a provided maximum pivoting position.

6. Magnetic movement converter according to any one of the claims 1 to 5, **characterized in that** two first magnets (3) and one second magnet (4) are provided, the second magnet (4) being positioned between the first magnets (3) and delimiting together with a respective first magnet (3) a magnetic gap (6).

7. Magnetic movement converter according to claim 6, **characterized in that** in each magnetic gap (6) a magnetic core element (14) is arranged which is supported for rotation about the axis of rotation (d), the magnetic core elements (14) being arranged in a manner offset from each other by an angle of rotation of 180° with respect to the eccentric parts thereof.

8. Magnetic movement converter according to one of the claims 1 to 7, **characterized in that** a motor (21)-driven driving device (7) is provided for generating the pivotal movement (b) or the rotary movement, the driving device (7) including a spring device (26) acting on the second magnet (3) in the direction of the stroke (h) in a second section (4.2) spaced from the pivot axis (s).

9. Magnetic movement converter according to claim 8, **characterized in that** the spring device (26) includes at least one elongate leaf spring (30), which longitudinally extends perpendicularly to the pivot axis (s) and to the axis of rotation (d) and abuts against the second section (4.2) of the second magnet (4) with a first end portion (30.1) and in a resilient manner with the second end portion (30.2) thereof.

10. Magnetic movement converter according to claim 9, **characterized in that** bearing in the second end portion (30.2) of the leaf springs (30) is configured in a non-contacting manner by means of a magnetic spring system.

11. Magnetic movement converter according to claim 9, **characterized in that** the spring force of the spring device (26) is adjustable.

## Revendications

1. Convertisseur de mouvements magnétique destiné à la conversion d'un mouvement linéaire en un mouvement rotatif ou d'un mouvement rotatif en un mouvement linéaire moyennant un arrangement d'aimants comprenant des aimants mobiles l'un par rapport à l'autre de manière relative, dans lequel
sont prévus un premier aimant (3) et un deuxième aimant (4) chacun d'eux présentant une face latérale à action magnétique formant une face latérale d'aimant (5) et délimitant, dans une position zéro, une fente magnétique (6) plane,
le premier aimant (3) est disposé de manière rotative autour d'un axe de rotation (d) perpendiculaire à sa surface latérale d'aimant (5) et le deuxième aimant (4) est disposé de manière pivotante en avant et en arrière autour d'un axe de pivotement (s) perpendiculaire à l'axe de rotation (d),
la surface latérale d'aimant (5) du premier aimant (3) présente, par rapport à son étendue à travers de la fente magnétique (6), une forme non circulaire et/ou une partie excentrique (9) par rapport à l'axe de rotation (d), partie excentrique qui présente une cavité (10) et/ou une intensité d'aimantation différente de celle à l'extérieur de la partie excentrique (9), **caractérisé en ce que** les faces latérales d'aimant (5) des aimants (3, 4) présentent une polarité magnétique égale, la face latérale d'aimant (5) du deuxième aimant (4) est formée de façon circulaire par rapport à son étendue à travers de la fente magnétique (6) et
le deuxième aimant (4) est configuré comme un disque circulaire et le premier aimant (3) est configuré comme un disque rotatif (8) en forme de tranche du cercle, de segment du cercle et/ou de secteur de cercle, ledit disque présentant, sur un côté arrière (15) par rapport à son sens de rotation (r) prévu autour de l'axe de rotation (d), une projecture (16) s'étendant dans le sens de rotation (r), et/ou sur un côté antérieur (17) par rapport à son sens de rotation (r) prévu autour de l'axe de rotation (d), une cavité s'étendant dans le sens de rotation (3), telles qu'une ouverture de passage, une incision ou une partie coupée (18).

2. Convertisseur de mouvements magnétique destiné à la conversion d'un mouvement linéaire en un mouvement rotatif ou d'un mouvement rotatif en un mouvement linéaire moyennant un arrangement d'aimants comprenant des aimants mobiles l'un par rapport à l'autre de manière relative, dans lequel
sont prévus un premier aimant (3) et un deuxième aimant (4) chacun d'eux présentant une face latérale effective à action magnétique formant une face latérale d'aimant (5) délimitant, dans une position zéro, une fente magnétique (6) plane, la face latérale d'aimant (5) étant en forme circulaire par rapport à son étendue à travers la fente magnétique (6) des aimants (3, 4),
le deuxième aimant (4) étant pivotant en avant et en arrière autour d'un axe de pivotement (s) dans le plan de la face latérale d'aimant (5) du premier aimant (3), **caractérisé en ce que** la face latérale d'aimant (5) présente une polarité magnétique égale, le premier aimant est disposé de manière statique, les deux aimants (3, 4) sont configurés comme un disque cylindrique,
un élément de noyau d'aimant (14) prévu dans la fente magnétique (6) est disposé de manière rotative autour d'un axe de rotation (d) perpendiculaire à la face latérale d'aimant (5) du premier aimant, ledit élément de noyau d'aimant (14) ayant une forme non circulaire par rapport à son étendue à travers de la fente magnétique (6) et/ou comprenant une partie excentrique (9) par rapport à son axe de rotation (d), partie excentrique qui présente une cavité (10) et/ou une perméabilité différent de celle à l'extérieur de la partie excentrique (9), et l'élément de noyau d'aiment (14) étant configuré comme une disque rotatif (8) en forme de tranche du cercle, de segment du cercle et/ou de secteur de cercle, ledit disque présentant, sur un côté arrière (15) par rapport à son sens de rotation (r) prévu autour de l'axe de rotation (d), une projecture (16) s'étendant dans le sens de rotation (r), et/ou sur un côté antérieur (17) par rapport à son sens de rotation (r) prévu autour de l'axe de rotation (d), une cavité s'étendant dans le sens de rotation (3), telles qu'une ouverture de passage, une incision ou une partie coupée (18).

3. Convertisseur de mouvements magnétique selon la revendication 1 ou 2, **caractérisé en ce que** l'axe de pivotement (5) et l'axe de rotation (d) s'intersectent.

4. Convertisseur de mouvements magnétique selon la revendication 1 ou 2, **caractérisé en ce que** l'angle central du disque rotatif (8) en forme de tranche du cercle, de segment du cercle et/ou de secteur de cercle est supérieur à 120°.

5. Convertisseur de mouvements magnétique selon l'une quelconque des revendications 1 à 4, **caractérisé en ce que** ledit un écart dans la fente magnétique (6) dans la position zéro entre le premier aimant (3) et le deuxième aimant (4) ou entre le deuxième aimant (4) et l'élément de noyau d'aimant (14) est peu plus grande qu'une course maximale (h) prévue du deuxième aimant (4) de sa position zéro vers une position de pivotement maximale prévue.

6. Convertisseur de mouvements magnétique selon l'une quelconque des revendications 1 à 5, **caractérisé en ce que** sont prévus deux premiers aimants (3) et un deuxième aimant (4), le deuxième aimant étant positionné entre les premiers aimants (3) et délimitant avec un premier aimant (3) respectif une fente magnétique (6).

7. Convertisseur de mouvements magnétique selon la revendication 6, **caractérisé en ce que** dans chaque fente magnétique (6) est disposé un élément de noyau d'aimant (14) logé de manière rotative autour de l'axe de rotation (d), les éléments de noyau d'aimant (14) étant en quinconce dans un angle de rotation de 180° par rapport à sa partie excentrique (9).

8. Convertisseur de mouvements magnétique selon l'une quelconque des revendications 1 à 7, **caractérisé en ce qu'**un dispositif de commande (7) entraîné par moteur (21) est prévu pour produire le mouvement pivotant (b) ou le mouvement rotatif, ledit dispositif de commande (7) comprenant un dispositif à ressort (26) agissant sur le deuxième aimant (3) dans la direction de la course (h) dans une deuxième section (4.2) écartée de l'axe de pivotement (s).

9. Convertisseur de mouvements magnétique selon la revendication 8, **caractérisé en ce que** le dispositif à ressort (26) comporte au moins un ressort à lames (30) oblong s'étendant longitudinalement et perpendiculairement à l'axe de pivotement (s) et à l'axe de rotation (d) et prenant appui contre la deuxième section (4.2) du deuxième aimant (4) avec sa première partie extrême (30.1) et de manière résiliente avec sa deuxième partie extrême (30.2).

10. Convertisseur de mouvements magnétique selon la revendication 9, **caractérisé en ce que** le logement dans la deuxième partie extrême (30.2) des ressorts à lames (30) est configure d'une manière sans contact moyennant une suspension magnétique.

11. Convertisseur de mouvements magnétique selon la revendication 9 ou 10, **caractérisé en ce que** la force du dispositif à ressort (26) est adjustable.
